# EUROPEAN PATENT APPLICATION

(11) **EP 4 447 270 A1**
(43) Date of publication of application: **16.10.2024**
(21) Application number: 24169360.5
(22) Date of filing: 10.04.2024
(51) Int. Cl.: H02K 1/20

(54) **INTERNALLY COOLED LAMINATION AND LAMINATION ASSEMBLY OF AN ELECTRIC MOTOR STATOR, AND METHOD OF MAKING SAME**

(30) Priority: 10.04.2023 US 202318297855
(71) Applicant: ABB SCHWEIZ AG, 5400 Baden (CH)
(72) Inventor: MARTIN, William E., Greenville SC 29607 (US); ZEDEK, John M., Simpsonville SC 29681 (US); EVON, Stephen T., Easley SC 29642 (US)
(74) Representative: Maiwald GmbH

(57) **Abstract**

A lamination for a stator of an electric motor includes: a material sheet having a generally circular shape with a center and a radial direction, an outer contour, and an inner contour, the outer and inner contours being generally concentric with the center. The inner contour is defined by an arrangement of a plurality of teeth and a plurality of stator slots, each tooth of the plurality of teeth having one stator slot of the plurality of stator slots to a first side of the tooth and one stator slot of the plurality of stator slots to a second side of the tooth, the inner contour defining a rotor hole for receiving a rotor of the electric motor. The material sheet has a plurality of internal cooling holes arranged around the rotor hole.

## Description

### FIELD

The present disclosure generally relates to an internally cooled lamination and lamination assembly for a stator of an electric motor, and a method of making the same.

### BACKGROUND

Electric motors are used extensively in industrial applications and commercial products. For example, electric motors are used in control systems for industrial manufacturing equipment, electric vehicles, and commercial products such as heating, ventilation, and air conditioning ("HVAC") systems.

The National Electrical Manufacturers Association ("NEMA") publishes various standards documents related to electric motors to ensure that motors manufactured by different manufacturers meet certain design constraints that enable different motors to be swapped in a particular application. For example, NEMA publishes standards related to electric motor insulation classes, frame assignments, and motor enclosures. As an alternative to NEMA standards, the International Electrotechnical Commission ("IEC") also publishes electric motor standards that may be used in different parts of the world. The NEMA standards (e.g., NEMA MG 1-2016 1.25-1.27) define a plurality of motor enclosure types including, but not limited to, Open Drip-Proof ("ODP"), Totally Enclosed Fan-Cooled ("TEFC"), and Totally Enclosed Water-Cooled ("TEWC").

No matter the standard with which an electric motor complies, however, an electric motor typically includes a stator and a rotor coupled to a motor shaft. The stator is typically wound with insulated wire to produce a magnetic field. The rotor produces a rotating magnetic field using, for example, permanent magnets attached to the shaft or additional windings of insulated wire, or rotor bars with end rings. A stator may be manufactured by forming a core material (e.g., iron alloys, electrical steel, etc.) into a hollow cylinder and then winding the insulated wire around slots in the internal surface of the cylinder. The stator is then inserted into a motor housing, which forms the external enclosure of the motor. Different motor housings may be used for different enclosure types.

A stator that is manufactured from a solid billet of material may generate large losses caused by eddy currents formed in the stator core material. Thus, stators are not typically manufactured by machining a solid billet of material into the form of the stator. Instead, in order to reduce the eddy current losses, stators are typically manufactured using a lamination technique. For example, a shape of the stator is first punched out of a sheet of material, such as twenty-four gauge or twenty-six gauge steel. Laminations of the lamination assembly may then be coated with a dielectric material and assembled or stacked to form a lamination assembly of the stator. The lamination assembly can be held together with an adhesive material, rivets, and/or through-bolts. In some embodiments, the laminations of the lamination assembly are oxidized to form a dielectric (i.e., an oxide layer) and then stacked and held together with rivets that pass through locating holes in each lamination of the lamination assembly. The rivets may also be coated with a dielectric material or oxidized to prevent eddy currents from conducting between the laminations through the rivets.

In some motors, the lamination assembly of the stator can also serve as the motor housing, such that the stator does not need to be retained in a separate housing component. Features of the housing can be formed in an external contour of each lamination of the lamination assembly, and slots for the stator windings can be formed in an internal contour of each lamination.

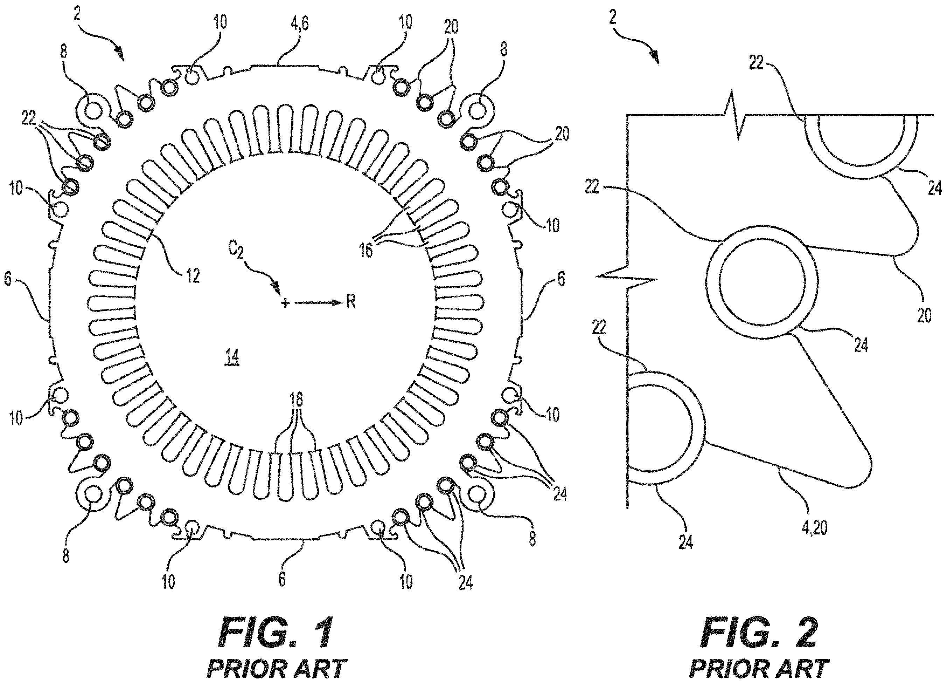

Figure 1 shows an example of a single lamination 2 of a lamination assembly according to the prior art. Lamination 2 has a nominal thickness. The outer contour 4 of lamination 2 is more or less circular in shape with beveled edges 6 at four sides thereof. Lamination 2 also includes a plurality of through-holes 8 and/or a plurality of rivet holes 10 used to secure together a plurality of laminations 2 to form a lamination assembly. An inner contour 12 of lamination 2 defines a rotor hole 14 designed to accept a rotor of the electric motor. A plurality of stator slots 16 are formed around the edge of rotor hole 14, plurality of stator slots 16 being defined by spaces between a plurality of teeth 18 arranged around rotor hole 14. Stator slots 16 are configured to accept coils of insulated conductors that form electromagnets that generate the magnetic field associated with the stator of the electric motor. Outer contour 4 includes a plurality of fins 20 that facilitate cooling of the electric motor. In particular, air can be blown across outer contour 4 of each lamination 2 (i.e., between fins 20) to cool the electric motor.

Furthermore, in the configuration shown, on outer contour 4 lamination 2 includes a plurality of receiving areas 22 configured to receive external cooling tubes 24 therein. The shape of receiving areas 22 conforms to at least a portion of a shape of a cross-section of each external cooling tube 24. For example, the shape of receiving areas 22 can be a curve having a radius that matches a circumference of external cooling tube 24. Circular external cooling tubes 24 (e.g., made of copper) can be inserted into receiving areas 22 at the base of fins 20 and retained within receiving areas 22. The shape of receiving areas 22 is sufficient to allow external cooling tubes 24 to be snapped into place. Alternatively, external cooling tubes 24 could be inserted along a length of a lamination assembly provided by a plurality of laminations 2 before securing motor end plates to the ends of the lamination assembly. In either case, however, a liquid such as water can flow through a fluid circuit formed in part by external cooling tubes 24 so as to provide additional cooling capacity to the electric motor (i.e., cooling capacity beyond the air cooling provided by fins 20). Figure 2 shows a close-up view of lamination 2 of Fig. 1.

As shown in Figs. 1-2, fins 20 do not completely support external cooling tubes 24, as a portion of the circumference of each external cooling tube 24 does not make contact with outer contour 4 of lamination 2. Consequently, the amount of contact between outer contour 4 and external cooling tubes 24 is limited, which correspondingly limits the conductive cooling provided by external cooling tubes 24.

Therefore, with respect to TEWC electric motors in particular, it may be useful to provide alternative or additional cooling methodologies.

### SUMMARY

In an embodiment, the present invention provides a lamination for a stator of an electric motor, the lamination comprising: a material sheet having a generally circular shape with a center and a radial direction, an outer contour, and an inner contour, the outer and inner contours being generally concentric with the center, wherein the inner contour is defined by an arrangement of a plurality of teeth and a plurality of stator slots, each tooth of the plurality of teeth having one stator slot of the plurality of stator slots to a first side of the tooth and one stator slot of the plurality of stator slots to a second side of the tooth, the inner contour defining a rotor hole configured to receive a rotor of the electric motor, and wherein the material sheet has a plurality of internal cooling holes arranged around the rotor hole, the plurality of internal cooling holes being disposed radially outward of the inner contour and radially inward of the outer contour.

### BRIEF DESCRIPTION OF THE DRAWINGS

Figure 1 shows a lamination of a lamination assembly according to the prior art;
Figure 2 shows a close-up view of the lamination of Fig. 1;
Figure 3 shows a lamination of a lamination assembly according to the present disclosure;
Figure 4 shows a lamination assembly constructed using a plurality of the lamination of Fig. 3;
Figure 5 shows the lamination assembly of Fig. 4 with end plates attached thereto;
Figure 6 shows the lamination assembly of Fig. 5 with headers attached thereto; and
Figure 7 shows an electric motor including the lamination assembly of Fig. 6.

### DETAILED DESCRIPTION

To overcome the problems associated with the prior art, the present application describes structure that provides liquid cooling internal to a lamination assembly, in contrast to the external liquid cooling provided by, for example, external cooling tubes 24 discussed in the context of prior art Figs. 1-2. Moving the structure for liquid cooling internally (also known as "into the back iron" of the lamination assembly or stator) increases the effectiveness of the cooling as compared to the prior art. Moving the liquid cooling structure internally also limits the associated internal cooling tubes from being exposed to the environment outside the electric motor, increasing the longevity of the electric motor, particularly in harsh environments. Such configurations also allow more room for various header designs to be used in connection with the lamination assembly. For example, such configurations allow for the header design described herein.

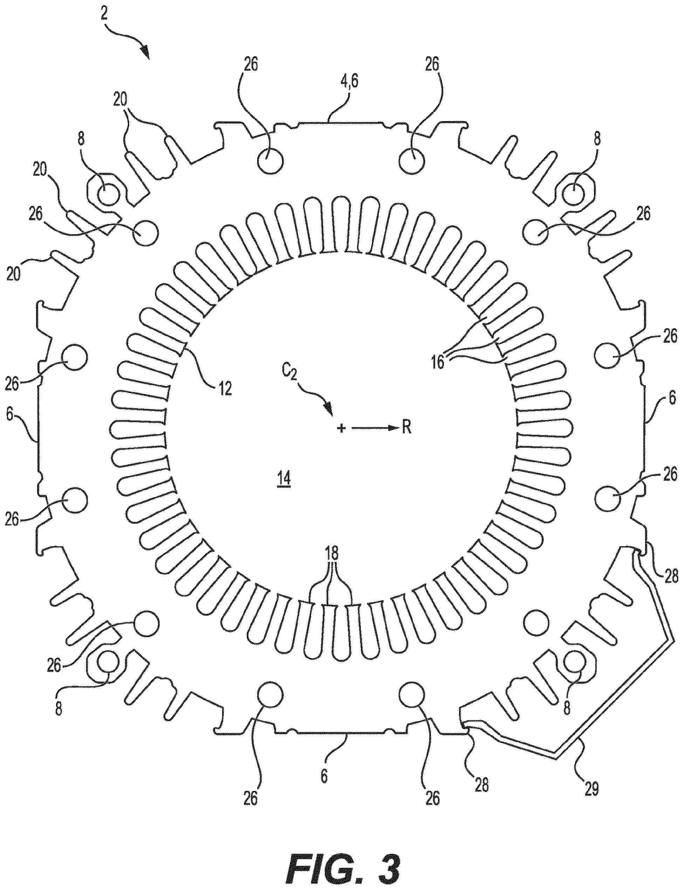

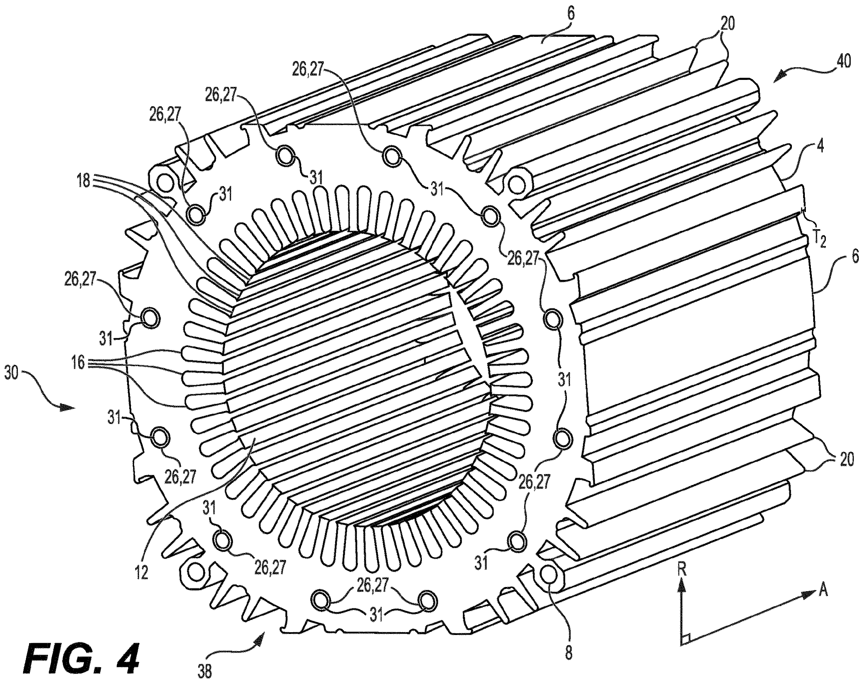

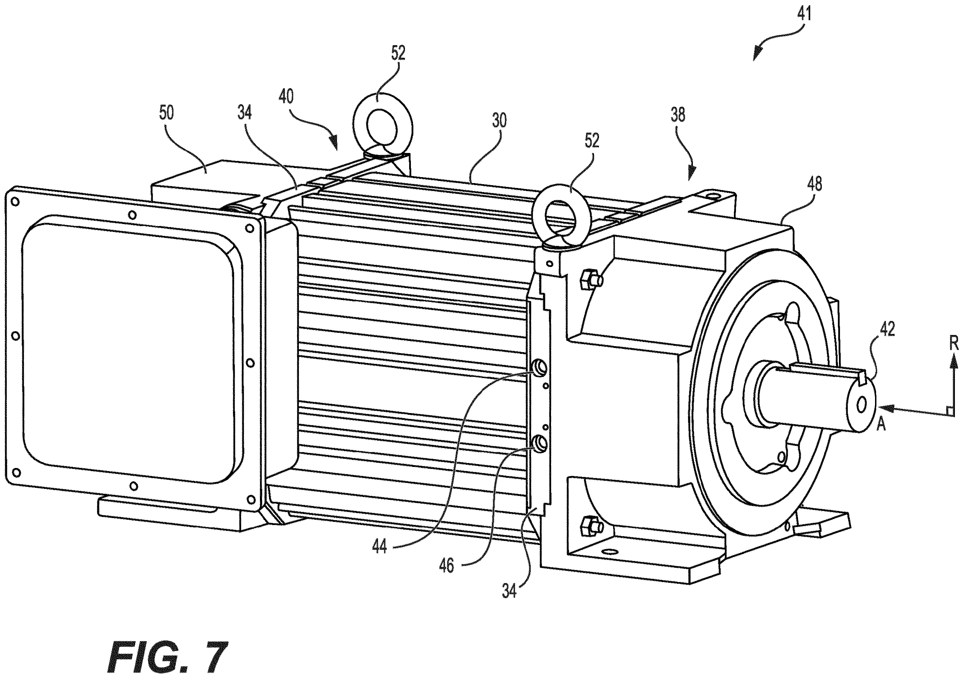

Figure 3 shows a front view of a single lamination 2 of an electric motor (e.g., electric motor 41, as shown in Fig. 7). Lamination 2 may be, for example, punched out of a sheet of material, such as twenty-four gauge or twenty-six gauge steel or iron alloy. In this manner, lamination 2 comprises a material sheet having a nominal thickness (e.g., thickness T₂, as shown in Fig. 4), such that lamination 2 (also called material sheet 2) is a subset of the overall sheet of material from which it is punched out. In an embodiment, each lamination 2 may be coated with a dielectric material or oxidized to prevent conduction of eddy currents from one lamination 2 to another.

In an embodiment, lamination 2 has a generally circular shape, as shown in Fig. 3. Consequently, lamination 2 can have a center C₂, from which radial direction R of lamination 2 originates. The axial direction A (e.g., as shown in Figs. 4-7) extends perpendicularly from radial direction R. In Fig. 3, axial direction A is into and/or out of the direction of the page, and is therefore not shown. The generally circular shape of lamination 2 can also include other polygon shapes, such as, for example, a square and an oval/ellipse, as those polygon shapes also have centers, radial directions, and axial directions (i.e., when a plurality of laminations 2 are stacked). In any case, however, lamination 2 does not necessarily need to have a perfectly circular shape.

Lamination 2 has an outer contour 4 and an inner contour 12, both of which are generally concentric with center C₂. Inner contour 12 is of a generally circular shape and is defined by an arrangement of a plurality of teeth 18 and a plurality of stator slots 16. In an embodiment, the arrangement can be generally circumferential. Each tooth 18 of the plurality of teeth 18 has one stator slot 16 of the plurality of stator slots 16 to a first side of the respective tooth 18, and a second stator slot 16 of the plurality of stator slots 16 to a second side of the respective tooth 18. In this manner, inner contour 12 alternates between a stator slot 16 and a tooth 18. Each stator slot 16 can extend radially outward in radial direction R approximately halfway from inner contour 12 to outer contour 4. When forming a stator of the electric motor, insulated wire may be wrapped around each tooth 18 of plurality of teeth 18 such that insulated wire rests in each stator slot 16. Inner contour 12 defines a rotor hole 14 that can accommodate a rotor of the electric motor formed in part by assembling a plurality of laminations 2 to form a lamination assembly, as discussed in more detail herein.

Outer contour 4 is disposed radially outward with respect to inner contour 12 (i.e., farther outward from center C₂ in radial direction R as compared inner contour 12). Outer contour 4 can include a plurality of features. For example, outer contour 4 may include a plurality of beveled edges 6. In the embodiment shown in Fig. 3, there are four beveled edges 6 disposed at equal circumferential intervals around outer contour 4. Outer contour 4 may include a plurality of through-holes 8, which can be used to secure together (e.g., by rivet, screw, bolt, or other connecting mechanism) a plurality of laminations 2 to form a lamination assembly, such as lamination assembly 30 shown in Figs. 4-7. Outer contour 4 may include a plurality of fins 20, which can help facilitate additional cooling of the associated electric motor (e.g., through air cooling). Fins 20 extend at least partially outward in radial direction R with respect to rotor hole 14. If desired, outer contour 4 can also include a plurality of pairs of retainers 28, each of which also extends at least partially outward in radial direction R with respect to rotor hole 14. Each pair of retainers 28 can be used to secure a cover 29, creating passageways between each cover 29 and outer profile 4 through which air can be circulated to facilitate additional cooling of the electric motor. Each cover 29 can also be used to limit the exposure of certain features on outer profile 4 to the environment. Each cover 29 is removable from the associated pair of retainers 28.

A plurality of internal cooling holes 26 is arranged around rotor hole 14. By being distributed over lamination 2, plurality of internal cooling holes 26 provides improved cooling for the associated electric motor by forming a fluid cooling circuit through which a cooling liquid can flow. In particular, although each internal cooling hole 26 is a hole, when a plurality of laminations 2 are stacked together (e.g., to form lamination assembly 30 as shown in Figs. 4-7), the internal cooling holes 26 in adjacent laminations 2 are aligned such that the series of internal cooling holes 26 at a particular circumferential location (i.e., with respect to lamination 2) together form an internal cooing tube 27, as shown in Figs. 4-7, and as discussed in more detail herein.

Internal cooling holes 26 can be configured in different ways, but are generally disposed radially outward of inner contour 12 and radially inward of outer contour 4. For example, plurality of internal cooling holes 26 can be spaced at even circumferential intervals from one another. Each internal cooling hole 26 of the plurality of internal cooling holes 26 can be identical in shape. Plurality of internal cooling holes 26 may include twelve internal cooling holes 26, although other numbers of internal cooling holes 26 are contemplated. For example, if more cooling is desired, the number of internal cooling holes 26 in each lamination 2 can be increased; if less cooling is desired, the number of internal cooling holes 26 in each lamination 2 can be decreased. In an embodiment, each internal cooling hole 26 of plurality of internal cooling holes 26 is at a same distance in radial direction R with respect to center C₂.

When lamination 2 includes plurality of through-holes 8, plurality of through-holes 8 are disposed radially outward with respect to plurality of internal cooling holes 26. In this manner, plurality of through-holes 8 are used for a purpose other than the cooling of the electric motor, which is the functionality instead provided by plurality of internal cooling holes 26. It is also possible that plurality of through-holes 8 is smaller in number than plurality of internal cooling holes 26. For example, as shown in Fig. 3, there are twelve internal cooling holes 26 but only four through-holes 8. In some embodiments, plurality of internal cooling holes 26 are disposed closer to outer contour 4 (i.e., in radial direction R) than they are to inner contour 12, although other arrangements are possible.

Lamination 2 can also be symmetric. For example, when lamination 2 includes plurality of through-holes 8, lamination 2 can be symmetric with respect to two diametrically opposed through-holes 8 of plurality of through-holes 8. When lamination 2 includes plurality of beveled edges 6, lamination 2 can be symmetric with respect to two diametrically opposed beveled edges 6 of plurality of beveled edges 6. Lamination 2 can also be symmetric with respect to two diametrically opposed internal cooling holes 26. Other symmetries are possible.

A plurality of laminations 2 can be formed into a lamination assembly, such as lamination assembly 30 shown in Fig. 4. Specifically, in lamination assembly 30, each lamination 2 of the plurality of laminations 2 is in direct contact with at least one other lamination 2 of the plurality of laminations 2 so as to form a stack. Moreover, laminations 2 in the middle of lamination assembly 30 have one lamination 2 to either side with respect to axial direction A. Lamination assembly 30 can include a large number of laminations 2. For example, in an embodiment, lamination assembly 30 can include 650 laminations 2. However, the number of laminations 2 in lamination assembly 30 can vary depending on a desired size/output of the corresponding electric motor in which lamination assembly 30 forms the stator.

When forming lamination assembly 30 using a plurality of laminations 2, the plurality of internal cooling holes 26 of each lamination 2 are aligned with one another such that the corresponding stack of laminations 2 in lamination assembly 30 is provided with a plurality of internal cooling tubes 27 extending in axial direction A. In particular, while internal cooling holes 26 of an individual lamination 2 do extend in axial direction A (i.e., in an amount equal to thickness T₂ of a particular lamination 2), the overall extension of each internal cooling hole 26 in axial direction A is relatively negligible since each lamination 2 has only a nominal thickness T₂. However, when a large number of laminations 2 (e.g., 650 laminations 2) are stacked together to form lamination assembly 30, the depths of each individual internal cooling hole 26 (i.e., depths each corresponding to thickness T₂) add up, such that each collection of internal cooling holes 26 at a particular circumferential location on lamination assembly 30 forms an internal cooling tube 27 that extends much farther in axial direction A than a single internal cooling hole 26. In this manner, an extent of lamination assembly 30 in axial direction A is greater than an extent of lamination assembly 30, from a center C₂ of lamination assembly 30, in radial direction R.

By aligning each lamination 2 in lamination assembly 30 in this manner, lamination assembly 30 is consequently provided with a plurality of internal cooling tubes 27. Internal cooling tubes 27 can then be used to form parts of a fluid cooling circuit within lamination assembly 30, namely one which can facilitate the flow of a cooling medium, such as water, during operation of the corresponding electric motor in order to cool the electric motor. The cooling medium can be directed into one or more of plurality of internal cooling tubes 27 by a header, as discussed in more detail herein. The fluid cooling circuit can be open- or closed-loop. The cooling provided by plurality of internal cooling tubes 27 can be either in addition, or as an alternative, to other cooling methods of the electric motor (e.g., air cooling by blowing air across outer contour 4 of each lamination 2 (i.e., between fins 20)).

Once plurality of internal cooling tubes 27 is formed, a lining 31 may be inserted into each internal cooling tube 27 along axial direction A. Each lining 31 helps to facilitate the flow of cooling medium through the associated internal cooling tube 27. Linings 31 can be the same or a different material than the material of laminations 2. For example, linings 31 could be made of stainless steel, copper, or aluminum, among other materials.

A method of making lamination assembly 30 shown in Fig. 4 includes first forming a plurality of laminations 2, such as lamination 2 shown in Fig. 3. Each lamination 2 of plurality of laminations 2 is identical, meaning each lamination 2 has the same shape and features. Plurality of laminations 2 are then stacked such that each lamination 2 is in direct contact with at least one adjacent lamination 2. Laminations 2 in the middle of lamination assembly 30 have one lamination 2 to either side with respect to axial direction A. Moreover, each lamination 2 of the plurality of laminations 2 is positioned in contact with an adjacent lamination 2 such that the plurality of internal cooling holes 26 of each lamination 2 are aligned with one another so as to form a plurality of internal cooling tubes 27 in the resulting lamination assembly 30, as discussed above.

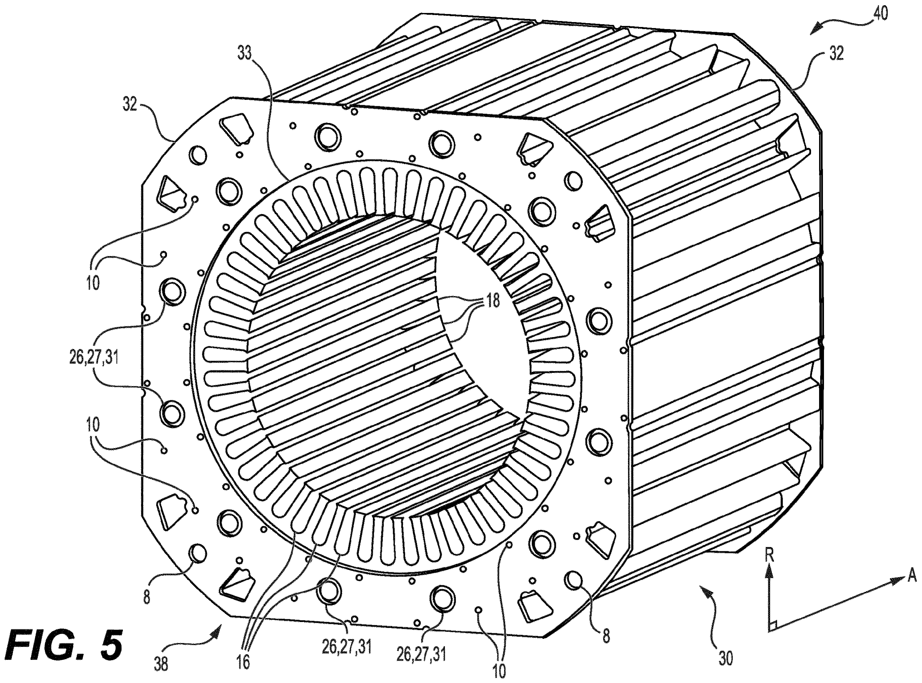

After forming lamination assembly 30 from plurality of laminations 2, a first end plate 32 can be positioned on a first end 38 of lamination assembly 30, as shown in Fig. 5. Moreover, a second end plate 32 can be positioned on a second end 40 of lamination assembly 30, second end 40 being opposite first end 38 in axial direction A. Each end plate 32 has its own plurality of internal cooling holes 26 that line up with plurality of internal cooling tubes 27 of lamination assembly 30 so as to not impede the flow of a cooling medium through plurality of internal cooling tubes 27 of lamination assembly 30. Each end plate 32 also has its own plurality of through-holes 8 that line up with plurality of through-holes 8 of lamination assembly 30, if lamination assembly 30 is so equipped. Each end plate 32 can also include a large, centrally located, circular hole 33 aligned with center C₂ of the nearest lamination 2 such that rotor hole 14, plurality of stator slots 16, and plurality of teeth 18 of lamination assembly 30 are not covered by positioning an end plate 32 on first end 38 or second end 40 of lamination assembly 30.

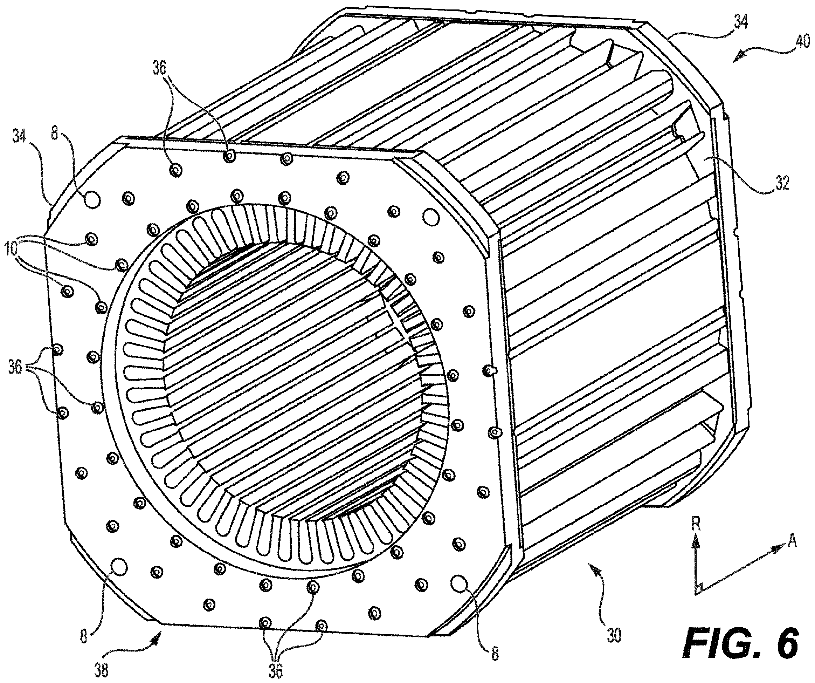

As shown in Fig. 6, after positioning end plates 32 on first end 38 and second end 40 of lamination assembly 30, a first header 34 can be secured to end plate 32 on first end 38 and a second header 34 can be secured to end plate 32 on second end 40. Each header 34 can also be secured to lamination assembly 30. For example, each header 34 can be secured to its respective end plate 32 and to lamination assembly 30 by inserting rivets 36 or the like into rivet holes 10 of headers 34, end plates 32, and at least partially into lamination assembly 30, or by inserting bolts or the like into plurality of through-holes 8 on each of headers 34, end plates 32, and lamination assembly 30.

As shown in more detail in Fig. 7, each header 34 directs cooling medium into plurality of internal cooling tubes 27 of lamination assembly 30, as discussed in more detail in other patent applications from the assignee of the present application. In other words, each header 34 is a component of the fluid cooling circuit partially provided by plurality of internal cooling tubes 27 of lamination assembly 30. Figure 7 shows that headers 34 each include a fluid inlet 44 and a fluid outlet 46 through which cooling medium can enter and exit, respectively, each header 34, and, correspondingly, plurality of internal cooling tubes 27 of lamination assembly 30.

Figure 7 also shows an assembled electric motor 41 that uses lamination assembly 30. A drive end 48 of electric motor 41 is attached at first end 38 of lamination assembly 30. Drive end 48 includes shaft 42, which extends in axial direction A. A non-drive end 50 of electric motor 41 is attached at second end 40 of lamination assembly 30. Both drive end 48 and non-drive end 50 of electric motor 41 can include one or more eye hooks 52 that can be used to lift electric motor 41.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below. Additionally, statements made herein characterizing the invention refer to an embodiment of the invention and not necessarily all embodiments.

The terms used in the claims should be construed to have the broadest reasonable interpretation consistent with the foregoing description. For example, the use of the article "a" or "the" in introducing an element should not be interpreted as being exclusive of a plurality of elements. Likewise, the recitation of "or" should be interpreted as being inclusive, such that the recitation of "A or B" is not exclusive of "A and B," unless it is clear from the context or the foregoing description that only one of A and B is intended. Further, the recitation of "at least one of A, B and C" should be interpreted as one or more of a group of elements consisting of A, B and C, and should not be interpreted as requiring at least one of each of the listed elements A, B and C, regardless of whether A, B and C are related as categories or otherwise. Moreover, the recitation of "A, B and/or C" or "at least one of A, B or C" should be interpreted as including any singular entity from the listed elements, e.g., A, any subset from the listed elements, e.g., A and B, or the entire list of elements A, B and C.

### List of reference numerals

- 2: lamination/material sheet
- 4: outer contour
- 6: beveled edge
- 8: through-hole
- 10: rivet hole
- 12: inner contour
- 14: rotor hole
- 16: stator slot
- 18: teeth
- 20: fin
- 22: receiving area
- 24: external cooling tube
- 26: internal cooling hole
- 27: internal cooling tube
- 28: retainer
- 29: cover
- 30: lamination assembly
- 31: lining
- 32: end plate
- 33: hole
- 34: header
- 36: rivet
- 38: first end of the lamination assembly
- 40: second end of the lamination assembly
- 41: electric motor
- 42: shaft
- 44: fluid inlet
- 46: fluid outlet
- 48: drive end
- 50: non-drive end
- 52: eye hook
- A: axial direction
- C2: center of lamination/material sheet 2
- R: radial direction
- T2: thickness of lamination/material sheet 2

## Claims

1. A lamination for a stator of an electric motor, the lamination comprising:
a material sheet having a generally circular shape with a center and a radial direction, an outer contour, and an inner contour, the outer and inner contours being generally concentric with the center,
wherein the inner contour is defined by an arrangement of a plurality of teeth and a plurality of stator slots, each tooth of the plurality of teeth having one stator slot of the plurality of stator slots to a first side of the tooth and one stator slot of the plurality of stator slots to a second side of the tooth, the inner contour defining a rotor hole configured to receive a rotor of the electric motor, and
wherein the material sheet has a plurality of internal cooling holes arranged around the rotor hole, the plurality of internal cooling holes being disposed radially outward of the inner contour and radially inward of the outer contour.

2. The lamination of claim 1, wherein the plurality of internal cooling holes are spaced at even circumferential intervals from one another.

3. The lamination of claim 1, wherein each internal cooling hole of the plurality of internal cooling holes is identical in shape.

4. The lamination of claim 1, wherein the outer contour comprises a plurality of fins, each fin of the plurality of fins extending at least partially outward in the radial direction with respect to the rotor hole.

5. The lamination of claim 1, wherein the material sheet has a plurality of through-holes disposed radially outward with respect to the plurality of internal cooling holes.

6. The lamination of claim 5, wherein the plurality of through-holes is smaller in number than the plurality of internal cooling holes.

7. The lamination of claim 5, wherein the lamination is symmetric with respect to two diametrically opposed through-holes of the plurality of through-holes.

8. The lamination of claim 1, wherein the material sheet comprises at least one pair of retainers disposed on the outer contour, each at least one pair of retainers being configured to hold a cover therebetween.

9. The lamination of claim 1, wherein the plurality of internal cooling holes are disposed closer to the outer contour than to the inner contour.

10. The lamination of claim 1, wherein the outer contour comprises a plurality of beveled edges.

11. The lamination of claim 10, wherein the lamination is symmetric with respect to two diametrically opposed beveled edges of the plurality of beveled edges.

12. The lamination of claim 1, wherein each internal cooling hole of the plurality of internal cooling holes is at a same distance in the radial direction with respect to the center.

13. A lamination assembly for an electric motor, the lamination assembly comprising:
a plurality of laminations, each lamination of the plurality of laminations comprising:
a material sheet having a generally circular shape with a center and a radial direction, an outer contour, and an inner contour, the outer and inner contours being generally concentric with the center,
wherein each inner contour is defined by an arrangement of a plurality of teeth and a plurality of stator slots, each tooth of the plurality of teeth having one stator slot of the plurality of stator slots to a first side of the tooth and one stator slot of the plurality of stator slots to a second side of the tooth, each inner contour defining a rotor hole configured to receive a rotor of the electric motor,
wherein each material sheet has a plurality of internal cooling holes arranged around the rotor hole, the plurality of internal cooling holes being disposed radially outward of the respective inner contour and radially inward of the respective outer contour, and
wherein each lamination of the plurality of laminations is in direct contact with at least one other lamination of the plurality of laminations such that the plurality of internal cooling holes of each lamination are aligned so as to form a plurality of internal cooling tubes in the lamination assembly.

14. The lamination assembly of claim 13, further comprising:
a lining disposed within each internal cooling tube of the plurality of internal cooling tubes.

15. The lamination assembly of claim 13, wherein an extent of the lamination assembly in an axial direction is greater than an extent of the lamination assembly, from a center of the lamination assembly, in the radial direction.

16. A method of making a lamination assembly for a stator of an electric motor, the method comprising:
forming a plurality of laminations, each lamination of the plurality of laminations comprising a material sheet having a generally circular shape with a center and a radial direction, an outer contour, and an inner contour, the outer and inner contours being generally concentric with the center, each inner contour being defined by an arrangement of a plurality of teeth and a plurality of stator slots, each tooth of the plurality of teeth having one stator slot of the plurality of stator slots to a first side of the tooth and one stator slot of the plurality of stator slots to a second side of the tooth, the inner contour defining a rotor hole configured to receive a rotor of the electric motor, each material sheet having a plurality of internal cooling holes arranged around the rotor hole, the plurality of internal cooling holes of each material sheet being disposed radially outward of the inner contour and radially inward of the outer contour; and
stacking the plurality of laminations such that each lamination is in direct contact with at least one adjacent lamination and the plurality of internal cooling holes of each material sheet are aligned with one another so as to form a plurality of internal cooling tubes in the lamination assembly.

17. The method of claim 16, further comprising:
positioning a first end plate on a first end of the lamination assembly;
positioning a second end plate on a second end of the lamination assembly, the second end being opposite the first end in an axial direction.

18. The method of claim 17, further comprising:
securing a first header to the first end plate and the lamination assembly; and
securing a second header to the second end plate and the lamination assembly,
wherein the first and second headers each comprise a fluid inlet and a fluid outlet, each fluid inlet and fluid outlet being fluidically connected to the plurality of internal cooling tubes.
